(19) **Europäisches Patentamt**

**European Patent Office**

**Office européen des brevets**

(11) **EP 0 922 669 B1**

(12) **FASCICULE DE BREVET EUROPEEN**

(45) Date de publication et mention
de la délivrance du brevet:
**21.05.2003   Bulletin 2003/21**

(51) Int Cl.7: **C01B 17/05**, B01D 53/52

(21) Numéro de dépôt: **98402830.8**

(22) Date de dépôt: **16.11.1998**

(54) **Procédé de récupération du soufre à haute pression**

Hochdruckverfahren zur Rückgewinnung von Schwefel

Process for the recovery of sulphur at high pressure

(84) Etats contractants désignés:
**DE ES GB IT NL**

(30) Priorité: **05.12.1997  FR 9715520**

(43) Date de publication de la demande:
**16.06.1999   Bulletin 1999/24**

(73) Titulaire: **Institut Francais du Petrole
92852 Rueil-Malmaison Cedex (FR)**

(72) Inventeurs:
• **Dezael, Claude
78600 Maison Lafitte (FR)**

• **Lecomte, Patrice
92500 Rueil-Malmaison (FR)**
• **Queyrel, Jacques
78400 Chatou (FR)**

(56) Documents cités:
**EP-A- 0 227 291          EP-A- 0 280 750
EP-A- 0 409 480          WO-A-92/17401
DE-A- 4 326 032          US-A- 4 011 304**

• **SPECIAL REPORT: "Gas Process Handbook '92: Sulferox" HYDROCARBONS PROCESSING, vol. 71, no. 4, avril 1992, pages 134-134, XP002078001**

**Description**

La présente invention concerne un procédé de désulfuration d'un gaz acide contenant au moins de l'hydrogène sulfuré ($H_2S$) où l'étape de récupération du soufre est réalisée à haute pression.

Le procédé selon l'invention s'applique notamment pour récupérer le soufre élémentaire produit au cours d'un procédé rédox de désulfuration d'un gaz contenant au moins de l'$H_2S$. Au cours de ce procédé on utilise une solution catalytique comprenant au moins un métal polyvalent chélaté par au moins un agent chélatant dans des conditions appropriées pour réaliser l'oxydation de l'hydrogène sulfuré en soufre élémentaire et la réduction simultanée du métal polyvalent d'un degré d'oxydation supérieur à un degré d'oxydation inférieur. On récupère, d'une part un effluent gazeux sensiblement débarrassé de l'hydrogène sulfuré et, d'autre part, la solution aqueuse catalytique au moins partiellement réduite contenant du soufre élémentaire sous la forme d'un solide en suspension qui sera récupéré. Cette solution doit alors faire l'objet de traitement pour séparer le soufre et récupérer la solution.

L'art antérieur décrit de nombreux procédés rédox et dispositifs permettant d'éliminer l'hydrogène sulfuré et de récupérer le soufre élémentaire formé en cours de procédé.

En général il est connu de mettre la solution contenant le soufre élémentaire en contact avec de l'air à pression atmosphérique et de récupérer le soufre par flottation et/ou décantation. Lorsque le gaz à désulfurer est à haute pression, il est nécessaire d'effectuer une étape de détente préalable de la solution catalytique contenant le soufre pour pouvoir la réoxyder à l'air. Cette détente provoque un dégazage de la solution généralement qui est à l'origine de problèmes de moussage et de colmatage.

Le procédé selon l'invention propose une nouvelle approche de récupération du soufre qui offre notamment l'avantage d'éviter la formation de mousse et les problèmes de colmatage résultants, et aussi de minimiser la dépense en énergie nécessaire à la recompression de la solution catalytique régénérée.

Dans toute la suite de la description, on désigne par l'expression « haute pression » une étape où la pression est au moins supérieure à 1MPa et « basse pression » une étape réalisée à une pression voisine de la pression atmosphérique.

La présente invention concerne un procédé de désulfuration d'une charge gazeuse contenant de l'hydrogène sulfuré.

Il est caractérisé en ce qu'il comporte par exemple la succession d'étapes suivantes:

a) on met en contact la charge gazeuse avec une solution aqueuse catalytique comprenant au moins un métal polyvalent chélaté par au moins un agent chélatant, dans des conditions appropriées pour effectuer l'oxydation de l'hydrogène sulfuré en soufre élémentaire et la réduction concomitante du métal polyvalent d'un degré d'oxydation supérieur à un degré d'oxydation inférieur, et l'on récupère, d'une part un effluent gazeux sensiblement débarrassé en hydrogène sulfuré et, d'autre part la solution aqueuse catalytique au moins réduite et contenant du soufre élémentaire,

b) par filtration à une pression au moins supérieure à 1 MPa, on sépare le soufre élémentaire de ladite solution aqueuse catalytique réduite pour obtenir une solution aqueuse catalytique réduite et appauvrie en soufre

c) on détend au moins une partie de ladite solution aqueuse catalytique réduite et appauvrie en soufre pour obtenir une solution aqueuse réduite et détendue,

d) on régénère ladite phase aqueuse réduite et dégazée en la mettant en contact avec un agent oxydant pour obtenir une phase aqueuse catalytique régénérée, et on recycle à l'étape a) au moins une partie de la solution aqueuse catalytique régénérée.

Selon un mode de mise en oeuvre du procédé, on sépare la solution aqueuse réduite et appauvrie en soufre en une fraction majoritaire F1 et une fraction minoritaire F2 avant d'effectuer l'étape de détente c) et on recycle la fraction majoritaire avant détente vers l'étape d'absorption a).

Le métal polyvalent peut être l'ion ferrique et on effectue par exemple une mesure de potentiel de la solution aqueuse réduite avant séparation et on détermine les fractions F1 et F2 pour conserver le ratio des ions ferriques aux ions ferreux sensiblement égal à 20.

On peut opérer l'étape de séparation b) à une pression comprise entre 1 et 10 MPa.

On peut utiliser pour l'étape de régénération de l'air comme agent oxydant

La solution aqueuse peut être une solution catalytique de fer chélaté, produite à partir de fer ferreux ou ferrique tel que les sulfates, les nitrates, le thiosulfate, le chlorure, l'acétate, l'oxalate, les phosphates, les sels solubles de fer et d'ammonium ou de potassium, tels que le sulfate de fer ferreux et d'ammonium, l'oxalate ferrique d'ammonium, l'oxalate ferrique de potassium, etc..

On peut utiliser des agents chélatants seuls ou en mélange, tels que des composés organiques connus pour leurs propriétés complexantes par exemple l'acétylacétone, l'acide citrique, l'acide salicyclique, l'acide sulfosalicyclique, le tiron (acide catéchodisulfonique), le dimercapto-2-3 propanol et les aminoacides par exemple l'EDTA (acide éthylènediamine tétraacétique), l'HEDTA (acide hydroxy2éthylènediamine triaacétique), le NTA (acide nitrilotriacétique), le DCTA (acide diamino-1-2 cyclohexane tétraacétique), le DPTA (acide diéthylènetriamine pentaacétique), l'IDA (acide imonodiacétique).

Selon un mode de mise en oeuvre du procédé, on réalise l'étape d'absorption en faisant circuler le gaz à traiter et la solution catalytique dans une même enceinte et à co-courant, et on sépare ledit gaz épuré de ladite solution réduite avant l'étape de séparation du soufre.

Selon une autre variante de mise en oeuvre, on réalise par exemple l'étape d'absorption en faisant circuler le gaz à traiter et la solution catalytique dans une même enceinte et à co-courant, et on sépare ledit gaz épuré de ladite solution réduite après l'étape de séparation du soufre.

Le procédé s'applique par exemple pour désulfurer un gaz naturel.

D'autres avantages et caractéristiques selon l'invention seront mieux compris à la lecture de la description ci-après de modes de réalisation décrits à titres d'exemples non limitatifs, en se référant aux dessins annexés où :

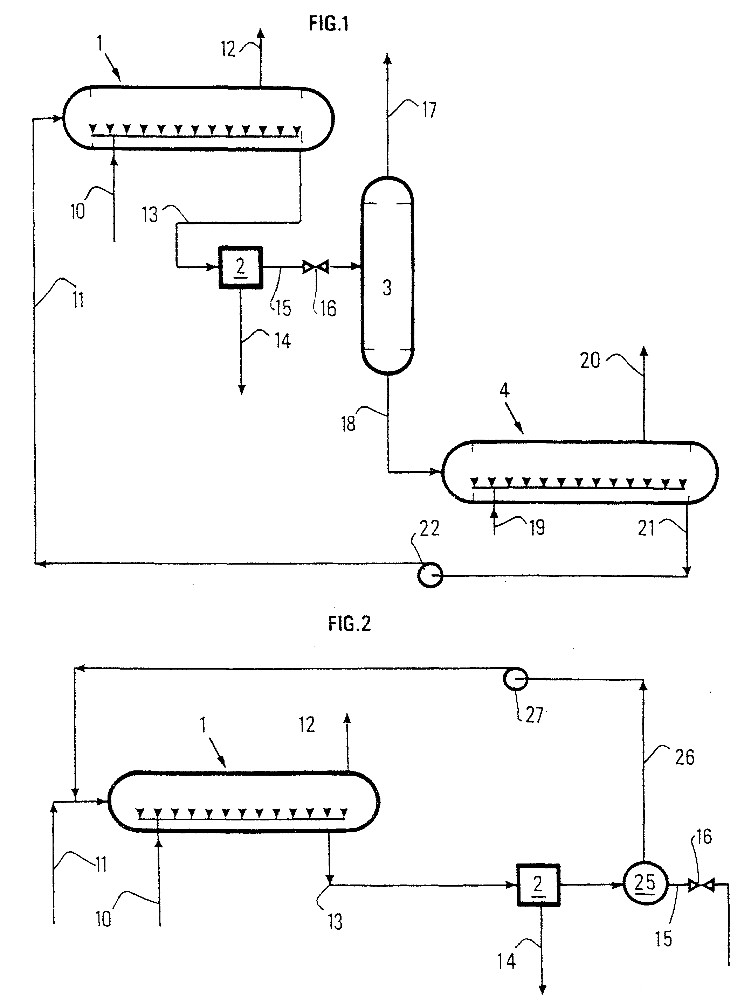

⇒ la figure 1 schématise un agencement des appareils nécessaires pour la mise en oeuvre du procédé selon l'invention,

⇒ la figure 2 montre partiellement une variante du procédé de la figue 1 où une partie de la solution catalytique est recyclée avant détente, et

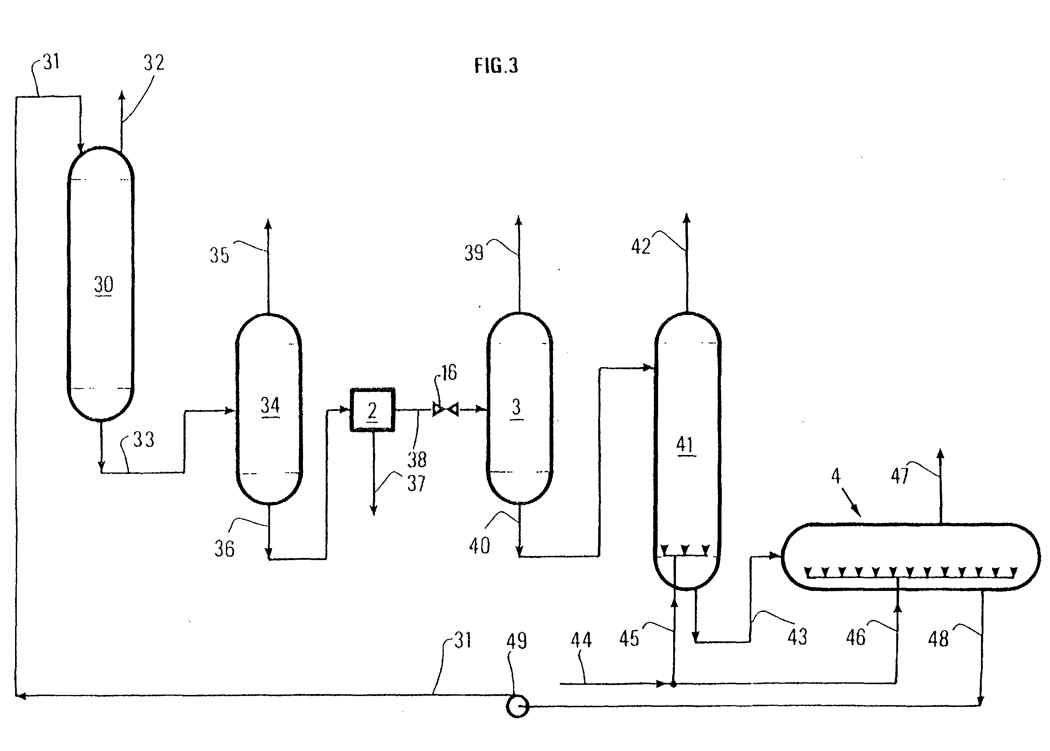

⇒ la figure 3 schématise une variante de réalisation où le gaz à traiter est contacté à co-courant avec une solution catalytique.

De manière à illustrer les étapes du procédé selon l'invention, les exemples qui suivent ont été donnés pour des procédés de désulfuration où l'on utilise une solution catalytique comprenant au moins un métal polyvalent chélaté par au moins un agent chélatant pour réaliser l'oxydation de l'hydrogène sulfuré en soufre élémentaire et la réduction concomitante du métal polyvalent d'un degré d'oxydation supérieur à un degré d'oxydation inférieur. A l'issue de ces procédés, on récupère d'une part un effluent gazeux appauvri en hydrogène sulfuré et, d'autre part, la solution aqueuse catalytique au moins réduite et contenant du soufre élémentaire.

Le procédé de désulfuration peut comporter les deux étapes d'oxydo-réduction suivantes:

- dans une première étape, l'$H_2S$ présent dans le gaz à traiter réagit avec des ions ferriques chélatés selon la réaction

$$H_2S + 2\,Fe^{3-}\,(\text{chél}) \text{-----------}\rightarrow S + 2H^- + 2\,Fe^{2+}\,(\text{chél}), \tag{1}$$

et

- dans une deuxième étape (étape de régénération), les ions ferreux obtenus sont réoxydés par l'air suivant la réaction

$$2\,Fe^{2+}\,(\text{chél}) + 2\,H^+ + \tfrac{1}{2}(O_2+4N_2) \text{-----------}\rightarrow 2\,Fe^{3+}\,(\text{chél}) + H_2O + 2N_2 \tag{2}$$

L'élimination de l'hydrogène sulfuré du gaz s'effectue habituellement par lavage du gaz au moyen de solutions de fer ferrique et éventuellement ferreux (solutions catalytiques), les ions ferriques et ferreux étant complexés par des agents chélatants appropriés, tels que des amino-acides polycarboxyliques. On peut utiliser un des acides donnés ci-après l'acétylacétone, l'acide citrique, l'acide salicyclique, l'acide sulfosalicyclique, le tiron (acide catéchodisulfonique), le dimercapto-2-3 propanol et les aminoacides par exemple l'EDTA (acide éthylènediamine tétraacétique), l'HEDTA (acide hydroxy2éthylènediamine triacétique), le NTA (acide nitrilotriacétique), le DCTA (acide diamino-1,2 cyclohexane tétracétique), le DPTA (acide diéthylènetriamine pentacétique), l'IDA (acide iminodiacétique). Ces acides peuvent être utilisés seuls ou encore être mélangés entre eux.

Le dispositif pour mettre en oeuvre le procédé selon l'invention qui est décrit à la figure 1 comporte une enceinte de mise en contact 1 du gaz à traiter avec la solution catalytique, où s'effectue l'oxydo-réduction suivant la réaction (1), un dispositif de séparation 2 du soufre élémentaire produit, une zone de flash 3, et une enceinte de régénération 4 de la solution catalytique.

L'enceinte de mise en contact ou absorbeur 1 est équipée d'un conduit 10 d'amenée du gaz à traiter, d'un conduit 11 permettant d'introduire la solution catalytique, d'un conduit 12 d'évacuation du gaz épuré au moins en majorité de l'hydrogène sulfuré qu'il contenait et d'un conduit 13 d'évacuation d'une solution comportant la solution catalytique réduite et le soufre élémentaire produit au cours de la réaction d'oxydo-réduction (1).

Le conduit 13 est relié au dispositif de séparation 2 du soufre qui peut être constitué par un filtre adapté à réaliser une séparation à haute pression. Le dispositif de séparation est disposé en fonctionnement normal avant le dispositif de détente mentionné ci-après. En sortie de filtre 2, le soufre élémentaire séparé est évacué par un conduit 14, alors que la solution réduite et épurée en majorité du soufre élémentaire est envoyée par un conduit 15 vers un dispositif de détente 16, par exemple une vanne. Cette détente produit un dégazage des gaz dissous dans la solution réduite à haute pression et éventuellement des produits organiques soufrés.

Le mélange de la solution catalytique réduite et détendue ainsi que les gaz produits par ce dégazage est introduit dans un ballon de flash 3. En tête du ballon flash 3, on récupère par un conduit 17 les gaz produits lors du dégazage, principalement des hydrocarbures légers, du $CO_2$, et en fond du ballon par un conduit 18, la solution catalytique réduite et dégazée.

Cette solution catalytique réduite et dégazée est envoyée vers l'enceinte de régénération 4, telle qu'un réacteur d'oxydation qui est pourvu d'un conduit 19 d'arrivée d'un agent oxydant tel que de l'air, d'un conduit 20 d'évacuation de l'air en excès qui n'a pas réagi, et d'un conduit 21 permettant l'évacuation de la solution catalytique régénérée. Cette solution catalytique régénérée peut ensuite être reprise par une pompe 22 et recyclée par le conduit 11 vers l'enceinte de mise en contact 1.

Avantageusement, la séparation du soufre réalisée à haute pression selon le procédé de l'invention, permet d'éviter les problèmes de mousse formée lors de la récupération du soufre selon les schémas de l'art antérieur à basse pression et les problèmes de colmatage des dispositifs utilisés pour la mise en oeuvre du procédé.

L'étape de séparation est par exemple réalisée en utilisant un filtre haute pression tel que celui décrit dans le brevet US 5,435,911.

Le dispositif adapté à la séparation du soufre comporte par exemple des cartouches de filtration sur lesquelles les particules de soufre élémentaire se déposent. Il peut comporter par exemple plusieurs registres de filtration qui vont fonctionner en alternance. Le soufre déposé est ensuite récupéré par décolmatage des cartouches à l'aide d'un contre-courant liquide ( débatissage humide) ou gazeux (débatissage à sec). Pendant l'opération de débatissage, le registre concerné ne joue pas son rôle de filtre et la solution continue d'être filtrée sur les autres registres. Le soufre est récupéré sous une forme d'un gâteau ou sous la forme d'une solution concentrée.

Le dispositif de filtration est choisi pour fonctionner à une valeur de pression comprise entre 0,1 et 20 MPa et de préférence entre 1 et 10 MPa.

L'exemple donné ci-après a pour objectif de mieux faire comprendre le procédé selon l'invention, et les avantages qu'il offre.

Exemple 1

Un gaz contenant du méthane, 5% de $CO_2$, 5000 ppm volume d'$H_2S$ et 30 ppm volume de $CH_3SH$, est introduit par le conduit 10 dans l'absorbeur 1. A l'intérieur de l'absorbeur 1 il est mis en contact avec une solution catalytique aqueuse contenant du fer dans des quantités de 0,05 mole/l et de l'acide nitrilotriacétique jouant le rôle d'agent complexant dans des proportions de 0,11 mole/l.

Le gaz est introduit avec un débit de l'ordre de 10 000 Nm$^3$/h et la solution aqueuse catalytique avec un débit d'environ 90 m$^3$/h.

A l'issue de cette étape d'oxydo-réduction se déroulant selon la réaction (1), on récupère par le conduit 12 un gaz épuré contenant 10 ppm volume de $H_2S$ et 15 ppm volume de $CH_2SH$, ainsi qu'une solution catalytique aqueuse réduite et comprenant du soufre élémentaire à une concentration voisine de 0,8 g/l.

La pression à l'intérieur de l'absorbeur peut être comprise entre 0,1 et 20 MPa et de préférence se situe dans la gamme [3 ; 12 MPa]. La valeur de température est comprise par exemple entre 10 et 40 °C, et de préférence est sensiblement égale à la température ambiante.

Le soufre élémentaire est séparé de la solution aqueuse réduite à l'intérieur du filtre 2 sous une pression sensiblement égale à 8 MPa, la quantité de soufre récupéré étant environ de 70 kg/heure.

La solution aqueuse réduite en sortie de filtre est à une pression voisine de 7,6 MPa et après détente à travers la vanne 16 à une pression sensiblement voisine de celle de la pression atmosphérique.

La solution aqueuse épurée du soufre et détendue, est envoyée à une étape flash où les gaz dissous sont éliminés, principalement les hydrocarbures légers, le $CO_2$, des produits organiques soufrés qui sont évacués par le conduit 17. Le gaz récupéré par le conduit 17 comporte du méthane 42 %, de l'eau 3%, du $CH_3SH$ 300 ppm volume et 55% de $CO_2$.

La solution aqueuse réduite dégazée et évacuée par le conduit 18 est envoyée vers l'étape de régénération qui s'effectue à la pression atmosphérique et à une température voisine de l'ambiante. Pour cela, on introduit de l'air par le conduit 19, de l'air en quantité suffisante pour que l'oxygène contenu permette l'oxydation des ions ferreux de la solution catalytique réduite en ions ferriques. Les ions ferreux sont réoxydés suivant la réaction d'oxydo-réduction (2) de façon à produire une solution catalytique régénérée. La solution catalytique régénérée est ensuite reprise par la pompe 22 dans laquelle la pression de la solution est remontée de la pression atmosphérique à une pression de 8 MPa et recyclée vers l'absorbeur 1.

L'air est envoyé avec un débit de 3000 Nm$^3$/h.

La figure 2 schématise une variante avantageuse de mise en oeuvre du procédé qui offre notamment comme avantage de minimiser l'énergie dépensée au cours de l'étape de recompression de la solution catalytique régénérée.

Elle s'applique particulièrement bien lorsque la solution catalytique après l'étape d'oxydation selon la réaction (1) est peu réduite. Elle s'applique notamment lorsque le rapport du débit des ions ferriques présents dans la solution catalytique sur le débit de l'hydrogène sulfuré est relativement élevé et au moins supérieur à 10.

Par rapport au schéma de la figure 1, cette variation de réalisation comprend un dispositif 25 permettant de fractionner la solution catalytique réduite et appauvrie en soufre issue du dispositif de séparation 2 en une fraction majoritaire F1 et une fraction minoritaire F2.

La fraction majoritaire F1 est envoyée par un conduit 26 et une pompe 27 vers l'entrée de l'absorbeur 1 sans être détendue à travers la vanne de détente 16. Cette fraction est mélangée à la solution catalytique rénégérée provenant par le conduit 11.

La fraction minoritaire F2 passe par le conduit 15, est détendue à travers la vanne 16 et envoyée vers l'étape de régénération.

Au niveau du dispositif de séparation 25, il est possible de disposer un moyen permettant de mesurer le potentiel de la solution catalytique réduite, et de contrôler en agissant sur la vanne 16, les proportions des fractions F1 et F2.

Une telle manière de procéder permet avantageusement d'éviter de détendre la totalité de solution catalytique régénérée et ainsi de minimiser l'énergie de recompression nécessaire assurée dans la pompe de recyclage 22 (figure 1).

## Exemple 2

Un gaz contenant du méthane, 3 % volume de $CO_2$, 50 ppm volume d'$H_2S$, et 10 ppm de $CH_3SH$ est introduit dans l'absorbeur par le conduit 10 avec un débit de l'ordre de 5000 Nm$^3$/h.

Il est mis en contact avec une solution catalytique aqueuse contenant du fer à une concentration de 0,25 mole/l et du NTA à la concentration de 0,5 mole/l, le débit de la solution étant de 15 m$^3$/h.

Comme dans l'exemple 1, on récupère un gaz épuré contenant 2 ppm de $H_2S$ et 5 ppm de $CH_3SH$, et une solution catalytique partiellement réduite et contenant du soufre élémentaire à une concentration d'environ 2,5 10$^{-2}$g/l.

Les conditions opératoires pression et température sont par exemple identiques à celles données à l'exemple 1.

En sortie du dispositif de filtration 2, on récupère environ 375g/h de soufre.

La solution catalytique partiellement réduite et qui ne comporte pratiquement plus de soufre est séparée en deux fractions :

- une fraction majoritaire F1, environ 13,5 m$^3$/h, qui est renvoyée vers l'enceinte de mise en contact 1 sans être détendue à travers la vanne de détente 16,
- une fraction F2 minoritaire, environ 1,5 m$^3$/h, qui est détendue à travers la vanne 16 jusqu'à une pression sensiblement égale à la pression atmosphérique et qui est ensuite envoyée à l'étape de régénération.

Il est possible de contrôler les fractions F1 et F2 après avoir effectué une mesure du potentiel de la solution catalytique après l'étape de filtration afin de conserver le rapport $Fe^{3+}/Fe^{2+}$ sensiblement égal à 20.

Le gaz récupéré à l'issue de l'étape de flash contient environ 35 % de $CO_2$ en volume et 100 ppm de $CH_3SH$, 62 % de méthane et 3 % d'eau.

La fraction F2 de la solution catalytique régénérée peut être recyclée vers l'absorbeur comme dans l'exemple donné à la figure 1. Le débit d'air envoyé pour l'étape de régénération est d'environ 15 Nm$^3$/h.

La figure 3 schématise une variante de mise en oeuvre du procédé selon l'invention où l'étape d'absorption (réaction d'oxydo-réduction selon le schéma (1)) est effectuée en faisant circuler le gaz et la solution catalytique à co-courant.

Pour cela, la zone d'absorption ou enceinte 1 (figure 1) comporte une colonne 30 adaptée pour fonctionner à co-courant. La colonne 30 est munie dans sa partie supérieure d'au moins un conduit 31 permettant d'introduire la solution catalytique, d'au moins un conduit 32 d'amenée du gaz à traiter, et dans sa partie inférieure d'un conduit 33 pour l'évacuation d'un mélange formé du gaz épuré au moins en majorité du soufre, de la solution catalytique réduite après la réaction d'oxydo-réduction (1) et de soufre élémentaire produit lors de cette réaction d'oxydo-réduction. Le mélange peut se présenter sous la forme d'une émulsion.

Le conduit 33 est relié à un ballon flash haute pression 34 en sortie duquel on évacue en tête par un conduit 35 le gaz épuré et en fond de ballon flash par un conduit 36 un mélange composé de la solution catalytique réduite et de soufre élémentaire.

Ce mélange est envoyé au dispositif de séparation 2 en sortie duquel, le soufre est évacué par un conduit 37 par exemple en fond, alors que la solution catalytique réduite est envoyée par un conduit 38 à l'étape de détente à travers la vanne 16. La solution réduite et détendue est introduite dans un ballon flash basse pression 3 (environ la pression atmosphérique) qui permet d'éliminer les gaz produits lors de la détente et qui sont évacués en tête de ballon flash par un conduit 39. La solution catalytique réduite est envoyée par un conduit 40 à une étape de stripage complémentaire, le conduit 40 débouchant de préférence dans la partie supérieure d'une colonne de stripage 41.

La colonne de stripage 41, comporte au niveau de sa partie inférieure par exemple, un conduit 45 qui va permettre d'introduire un gaz de stripage, tel que de l'air. Le conduit peut être une dérivation d'un conduit 44 principal d'amenée de l'air utilisé pour régénérer la solution catalytique réduite.

On évacue en tête de colonne de stripage par un conduit 42 le gaz de stripage avec les gaz dissous dans la solution catalytique, tels que les hydrocarbures $CH_4$, les BTX, le $CO_2$, les molécules organiques soufrées... et en fond de la colonne de stripage par un conduit 43 la solution catalytique réduite et stripée.

Cette solution réduite est ensuite envoyée à l'étape de régénération, introduite par le conduit 43 dans le ballon de régénération 4, oxydée et régénérée avec une partie de l'air introduit par un conduit 46, qui peut être une dérivation du conduit 44. L'air en excès non utilisé au cours de la réaction d'oxydo-réduction selon l'équation (2) est évacué en tête de ballon par un conduit 47 alors que la solution catalytique régénérée est soutirée en fond de ballon par un conduit 48 remise à une pression sensiblement identique à celle de l'absorbeur 30 par une pompe 49.

Les conditions opératoires de pression, de température, des débits d'injection du gaz et de la solution catalytique sont identiques à celles mentionnées dans l'un des deux exemples donnés précédemment. Les résultats au niveau des quantités récupérées peuvent aussi s'appliquer.

L'air utilisé dans la colonne de stripage est envoyé avec un débit voisin de 200 $m^3$/h.

Sans sortir du cadre de l'invention, il est possible de positionner l'unité de séparation 2 du soufre avant le ballon flash haute pression.

Cet mode de mise en oeuvre permet avantageusement d'augmenter la quantité de gaz dissous qui sont récupérés, les gaz issus par les conduits 39 et 42 pouvant être combinés et envoyés pour être utilisés comme fuel gas.

Sans sortir du cadre de l'invention le procédé selon l'invention peut aussi s'appliquer dans d'autres procédés ou en utilisant d'autres équipements. Par exemple il peut être envisageable de réaliser simultanément l'étape d'absorption et l'étape de séparation à haute pression du soufre produit au cours de la réaction d'oxydo-réduction (1).

**Revendications**

1. Procédé de désulfuration d'une charge gazeuse contenant de l'hydrogène sulfuré **caractérisé en ce qu'**il comporte les étapes suivantes :

   a) on met en contact la charge gazeuse avec une solution aqueuse catalytique comprenant au moins un métal polyvalent chélaté par au moins un agent chélatant, dans des conditions appropriées pour effectuer l'oxydation de l'hydrogène sulfuré en soufre élémentaire et la réduction concomitante du métal polyvalent d'un degré d'oxydation supérieur à un degré d'oxydation inférieur, et l'on récupère, d'une part un effluent gazeux sensiblement débarrassé en hydrogène sulfuré et, d'autre part la solution aqueuse catalytique au moins réduite et contenant du soufre élémentaire,
   b) par filtration à une pression au moins supérieure à 1 MPa, on sépare le soufre élémentaire de ladite solution aqueuse catalytique réduite pour obtenir une solution aqueuse catalytique réduite et appauvrie en soufre
   c) on détend au moins une partie de ladite solution aqueuse catalytique réduite et appauvrie en soufre pour obtenir une solution aqueuse réduite et détendue,
   d) on régénère ladite phase aqueuse réduite et détendue en la mettant en contact avec un agent oxydant pour obtenir une phase aqueuse catalytique régénérée, et
   e) on recycle à l'étape a) au moins une partie de la solution aqueuse catalytique régénérée.

2. Procédé selon la revendication 1, **caractérisé en ce que** l'on sépare ladite solution aqueuse réduite et appauvrie en soufre en une fraction majoritaire F1 et une fraction minoritaire F2 avant d'effectuer l'étape de détente c) et on recycle la fraction majoritaire F1 sans la détendre vers l'étape d'absorption étape a).

3. Procédé selon la revendication 2, **caractérisé en ce que** ledit métal polyvalent est l'ion ferrique et **en ce qu'**on effectue une mesure de potentiel de ladite solution aqueuse réduite avant séparation et on détermine les fractions F1 et F2 pour conserver le ratio des ions ferriques aux ions ferreux sensiblement égal à 20.

4. Procédé selon l'une des revendications 1 à 3, **caractérisé en ce que** l'on opère l'étape de séparation b) à une pression comprise entre 1 et 10 MPa.

5. Procédé selon l'une des revendications 1 à 4, **caractérisé en ce que** l'on utilise comme agent oxydant pour l'étape de régénération de l'air.

6. Procédé selon l'une des revendications 1 à 5, **caractérisé en ce que** la solution aqueuse est une solution catalytique de fer chélaté, produite à partir de fer ferreux ou ferriques tels que les sulfates, les nitrates, le thiosulfate, le chlorure, l'acétate, l'oxalate, les phosphates, les sels solubles de fer et d'ammonium ou de potassium, tels que le sulfate de fer ferreux et d'ammonium, l'oxalate ferrique d'ammonium, l'oxalate ferrique de potassium, etc..

7. Procédé selon l'une des revendications 1 à 6, **caractérisé en ce que** l'on utilise des agents chélatants seuls ou en mélange, tels que des composés organiques connus pour leurs propriétés complexantes par exemple l'acétylacétone, l'acide citrique, l'acide salicyclique, l'acide sulfosalicyclique, le tiron (acide catéchodisulfonique), le dimercapto-2-3 propanol et les aminoacides par exemple l'EDTA (acide éthylènediamine tétraacétique), l'HEDTA (acide hydroxy 2 éthylènediamine triaacétique), le NTA (acide nitrilotriacétique), le DCTA (acide diamino-1-2 cyclohexane tétraacétique), le DPTA (acide diéthylènetriamine pentaacétique), l'IDA (acide imonodiacétique).

8. Procédé selon la revendication 1, **caractérisé en ce que** l'on réalise l'étape d'absorption en faisant circuler le gaz à traiter et la solution catalytique dans une même enceinte et à co-courant, et on sépare ledit gaz épuré de ladite solution réduite avant l'étape de séparation du soufre.

9. Procédé selon la revendication 1, **caractérisé en ce que** l'on réalise l'étape d'absorption en faisant circuler le gaz à traiter et la solution catalytique dans une même enceinte et à co-courant, et on sépare ledit gaz épuré de ladite solution réduite après l'étape de séparation du soufre.

10. Application du procédé selon l'une des revendications 1 à 9 à la désulfuration d'un gaz naturel.

**Patentansprüche**

1. Verfahren zur Entschwefelung einer gasförmigen Schwefelwasserstoff enthaltenden Charge, **dadurch gekennzeichnet, dass** es die folgenden Stufen umfasst:

   a) man kontaktiert die gasförmige Charge mit einer wässrigen katalytischen Lösung, die wenigstens ein mehrwertiges durch wenigstens ein chelatierendes Mittel chelatiertes Metall unter geeigneten Bedingungen umfasst, um die Oxidation des Schwefelwasserstoffs zu elementarem Schwefel sowie die begleitende Reduktion des mehrwertigen Metalls von einem höheren Oxidationsgrad zu einem niedrigeren Oxidationsgrad durchzuführen und man gewinnt einerseits einen gasförmigen im wesentlichen von Schwefelwasserstoff befreiten Abstrom und andererseits die wässrige katalytische wenigstens reduzierte Lösung, die elementaren Schwefel enthält,

   b) durch Filtration bei einem Druck, der wenigstens höher als 1 MPa liegt, trennt man den elementaren Schwefel von dieser wässrigen katalytischen reduzierten Lösung ab, um eine wässrige katalytische reduzierte und an Schwefel verarmte Lösung zu erhalten,

   c) man entspannt wenigstens einen Teil dieser wässrigen katalytischen reduzierten und an Schwefel verarmten Lösung, um eine wässrige reduzierte und entspannte Lösung zu erhalten,

   d) man regeneriert diese wässrige reduzierte und entspannte Phase, indem man sie mit einem oxidierenden Mittel kontaktiert, um eine wässrige katalytische regenerierte Phase zu erhalten, und

   e) man rezykliert zur Stufe a) wenigstens einen Teil der wässrigen katalytischen regenerierten Lösung.

2. Verfahren nach Anspruch 1, **dadurch gekennzeichnet, dass** man diese wässrige reduzierte und an Schwefel verarmte Lösung in eine Hauptfraktion F1 und eine Nebenfraktion F2 vor Durchführung der Entspannungsstufe c) trennt und man die Hauptfraktion F1, ohne sie gegen die Absorptionsstufe a) zu entspannen, rezykliert.

3. Verfahren nach Anspruch 2, **dadurch gekennzeichnet, dass** dieses mehrwertige Metall ein Eisen(III)-Ion ist und dass man eine Potentialmessung dieser reduzierten wässrigen Lösung vor Trennung vornimmt und die Fraktionen F1 und F2 bestimmt, um das Verhältnis der Eisen(III)-Ionen zu den Eisen(II)-Ionen im wesentlichen gleich 20 zu halten.

4. Verfahren nach einem der Ansprüche 1 bis 3, **dadurch gekennzeichnet, dass** man die Trennstufe b) bei einem Druck zwischen 1 und 10 MPa durchführt.

5. Verfahren nach einem der Ansprüche 1 bis 4, **dadurch gekennzeichnet, dass** man als Oxidationsmittel für die Regenerationsstufe Luft verwendet.

6. Verfahren nach einem der Ansprüche 1 bis 5, **dadurch gekennzeichnet, dass** die wässrige Lösung eine katalytische Lösung von chelatiertem Eisen bzw. Chelateisen ist, die ausgehend von Eisen(II) oder Eisen(III) wie den Sulfaten, Ni- traten, dem Thiosulfat, dem Chlorid, dem Acetat, dem Oxalat, den Phosphaten, den löslichen Salzen des Eisens und Ammoniums oder Kaliums wie dem Eisen(II)-Sulfat und dem Ammoniumsulfat, dem Ammonium-Eisen(III)-Oxalat, dem Kalium-Eisen(III)-Oxalat etc. erzeugt wurde.

7. Verfahren nach einem der Ansprüche 1 bis 6, **dadurch gekennzeichnet, dass** man chelatbildende Mittel allein oder im Gemisch wie organische wegen ihrer komplexierenden Eigenschaften bekannte Verbindungen, beispielsweise Acetylaceton, Zitronensäure, Salicylsäure, Sulfosalicylsäure, Tiron (Catechodisulfonsäure), 2-3-Dimercaptanpropanol und die Aminosäuren, beispielsweise EDTA (Ethylendiamintetraessigsäure), HEDTA (2-Hydroxyethylendiamintriessigsäure), NTA (Nitrilotriessigsäure), DCTA (1-2-Diamincyclohexantetraessigsäure), DPTA (Diethylentriaminpentaessigsäure) oder IDA (Imonodiessigsäure), verwendet.

8. Verfahren nach Anspruch 1, **dadurch gekennzeichnet, dass** man die Absorptionsstufe durchführt, indem man das zu behandelnde Gas sowie die katalytische Lösung in ein und dem gleichen Raum und im Gleichstrom fließen lässt und man dieses gereinigte Gas von dieser reduzierten Lösung vor der Schwefelabtrennstufe trennt.

9. Verfahren nach Anspruch 1, **dadurch gekennzeichnet, dass** man die Absorptionsstufe durchführt, indem man das zu behandelnde Gas sowie die katalytische Lösung in ein und dem gleichen Raum sowie im Gleichstrom fließen lässt und man dieses gereinigte Gas von dieser reduzierten Lösung nach der Abtrennstufe des Schwefels trennt.

10. Anwendung des Verfahrens nach einem der Ansprüche 1 bis 9 auf die Entschwefelung eines Natur- bzw. Erdgases.

**Claims**

1. A method for desulfurizing a gaseous feed containing hydrogen sulfide, **characterized in that** it comprises the following stages :

   a) the gaseous feed is contacted with a catalytic aqueous solution comprising at least one polyvalent metal chelated by at least one chelating agent, under suitable conditions for oxidation of the hydrogen sulfide to elementary sulfur and concomitant reduction of the polyvalent metal from a higher oxidation level to a lower oxidation level, and a gaseous effluent substantially freed from hydrogen sulfide is recovered on the one hand and, on the other hand, the catalytic aqueous solution at least reduced and containing elementary sulfur,

   b) the elementary sulfur is separated from said reduced catalytic aqueous solution by filtering at a pressure at least above 1 MPa so as to obtain a reduced and sulfur-depleted catalytic aqueous solution,

   c) at least part of said reduced and sulfur-depleted catalytic aqueous solution is expanded so as to obtain a reduced and expanded aqueous solution,

   d) said reduced and expanded aqueous phase is regenerated by contacting it with an oxidizing agent so as to obtain a regenerated catalytic aqueous phase, and

   e) at least part of the regenerated catalytic aqueous solution is recycled to stage a).

**2.** A method as claimed in claim 1, **characterized in that** said reduced and sulfur-depleted aqueous solution is separated into a major fraction F1 and a minor fraction F2 prior to carrying out expansion stage c) and major fraction F1 is recycled without expansion to absorption stage a).

**3.** A method as claimed in claim 2, **characterized in that** said polyvalent metal is ferric ion and the potential of said reduced aqueous solution is measured before separation, and fractions F1 and F2 are determined so as to maintain the ratio of the ferric ions to the ferrous ions substantially equal to 20.

**4.** A method as claimed in any one of claims 1 to 3, **characterized in that** separation stage b) is carried out at a pressure ranging between 1 and 10 MPa.

**5.** A method as claimed in any one of claims 1 to 4, **characterized in that** air is used as the oxidizing agent for the regeneration stage.

**6.** A method as claimed in any one of claims 1 to 5, **characterized in that** the aqueous solution is a chelated iron catalytic solution produced from ferrous or ferric iron such as iron and ammonium or potassium sulfates, nitrates, thiosulfate, chloride, acetate, oxalate, phosphates, soluble salts, or ferrous iron and ammonium sulfate, ferric ammonium oxalate, ferric potassium oxalate, etc.

**7.** A method as claimed in any one of claims 1 to 6, **characterized in that** chelating agents are used alone or in admixture, such as organic compounds known for their complexing properties, for example acetylacetone, citric acid, salicylic acid, sulfosalicylic acid, tiron (catechodisulfonic acid), dimercapto-2-3-propanol and aminoacids, for example EDTA (ethylenediaminetetraacetic acid), HEDTA (hydroxy-2-ethylenediaminetriacetic acid), NTA (nitrilotriacetic acid), DCTA (diamino-1-2-cyclohexanetetraacetic acid), DPTA (diethylenetriaminepentaacetic acid), IDA (iminodiacetic acid).

**8.** A method as claimed in claim 1, **characterized in that** the absorption stage is carried out by cocurrent circulation of the gas to be processed and of the catalytic solution in a single chamber, and said scrubbed gas is separated from said reduced solution prior to the sulfur separation stage.

**9.** A method as claimed in claim 1, **characterized in that** the absorption stage is carried out by cocurrent circulation of the gas to be processed and of the catalytic solution in a single chamber, and said scrubbed gas is separated from said reduced solution after the sulfur separation stage.

**10.** Application of the method as claimed in any one of claims 1 to 9 for desulfurization of a natural gas.

**FIG.1**

**FIG.2**

FIG.3

EP 0 922 669 B1